# EUROPEAN PATENT APPLICATION

(11) **EP 1 731 690 A2**
(43) Date of publication of application: **13.12.2006**
(21) Application number: 06114627.0
(22) Date of filing: 29.05.2006
(51) Int. Cl.: E04D 13/00

(54) **Bird protection grill**

(30) Priority: 10.06.2005 IT VE20050020 U
(71) Applicant: Officine Rasera S.R.L., 31041 Cornuda (IT)
(72) Inventor: PIVA, Gildo, 31041, CORNUDA (IT); VISENTIN, Claudio, 31031, CAERANO DI SAN MARCO (IT)
(74) Representative: Piovesana, Paolo

(57) **Abstract**

A bird protector grill characterised by comprising a flange to be applied along the gutter line, said flange being provided with at least two rows 8, 8') of mutually offset teeth (10).

## Description

The present invention relates to a bird protector grill.

Bird protector grills are known consisting of a comb-like grill of copper, steel or plastic to apply to the gutter line of the roof covering of a ventilated roof before laying the roofing tiles.

The purpose of said grills is to prevent small animals from entering under the tiles, and in particular to prevent their nesting.

These known grills have however certain drawbacks, and in particular:
- they do not enable the roof to be reliably ventilated if the grill teeth are in close mutual contact,
- they are not highly reliable in preventing access to birds if the teeth are spaced apart, as the bird is able to bend them and pass through.

An object of the invention is to eliminate these drawbacks by providing a bird protector grill which prevents birds gaining access below the tiles along the gutter line.

Another object of the invention is to provide a bird protector grill which allows effective roof ventilation, even though a large hindering surface is present.

These and further objects which will be apparent from the ensuing description are attained according to the invention by a bird protector grill as described in claim 1.

The present invention is further described hereinafter with reference to the accompanying drawings, in which:

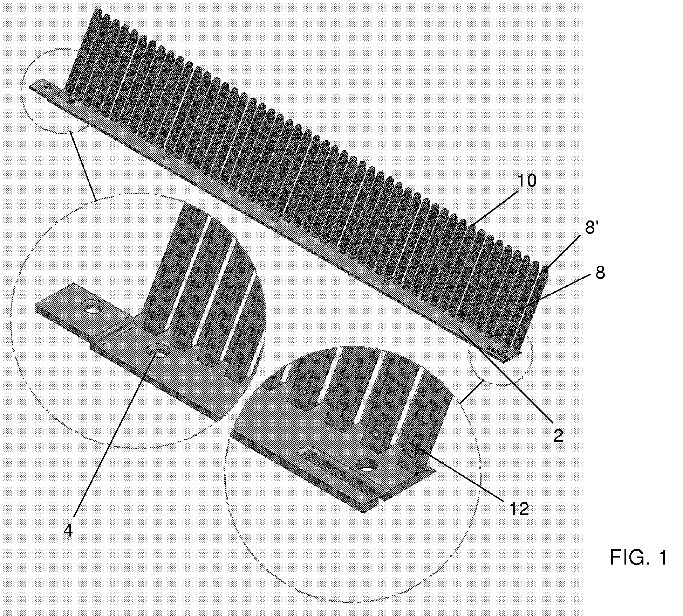

- Figure 1: is a perspective view of a bird protector grill of the invention taken from above;

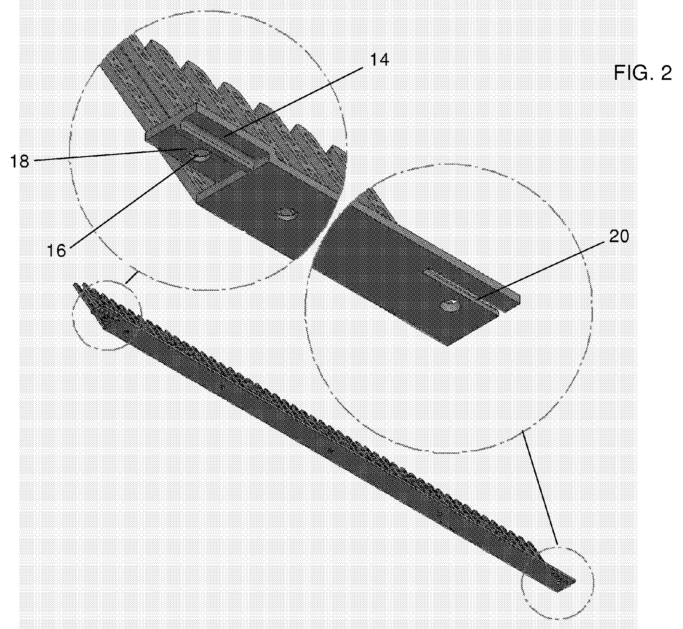

- Figure 2: is a perspective view thereof from below; and

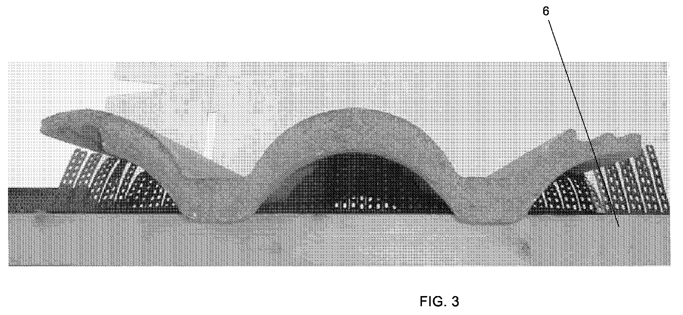

- Figure 3: shows it applied to the roof.

As can be seen from the figures, the bird protector grill according to the invention comprises substantially a flange 2 provided with holes 4 for its fixing to the roof covering 6.

From the flange 2 there extend two rows 8, 8' of teeth 10 provided with a plurality of vertically slotted holes 12.

The teeth of the two rows are mutually offset such that the teeth 10 of the row 8 are positioned substantially to cover the empty space between the side by side teeth 10 of the other row 8'.

Specifically, the width of each tooth is not greater than the distance between two side by side teeth.

At one end, the flange 2 is provided with a projecting lug 14 provided with a hole 16 and lowerly with a rib 18 cooperating with a slot 20 provided at the other end of the flange.

The bird protector grill of the invention is assembled in the following manner.

A first grill is applied along the gutter line, to the side of which a further grill is applied by inserting the rib 18 into the slot 20, hence requiring only one screw to pass through the end holes 4 of the two adjacent grills.

From this it is apparent that the bird protector grill of the invention presents numerous advantages, and in particular:
- it prevents passage not only of birds but also of insects as the double line of teeth represents an obstacle which is difficult to overcome,
- it allows considerable roof ventilation by virtue of the presence of the slotted holes.

## Claims

1. A bird protector grill **characterised by** comprising a flange to be applied along the gutter line, said flange being provided with at least two rows 8, 8') of mutually offset teeth (10).

2. A grill as claimed in claim 1, **characterised in that** at least the teeth of one row are provided with holes (12).

3. A grill as claimed in claim 1, **characterised in that** the width of each tooth (10) is not greater than the distance between two side by side teeth.

4. A grill as claimed in claim 1, **characterised in that** the flange is provided at one end with a holed projecting lug (14) provided lowerly with a rib (18) cooperating with a slot (20) present at the other end of an adjacent flange.
